# EUROPEAN PATENT APPLICATION

(11) **EP 1 351 189 A1**
(43) Date of publication of application: **08.10.2003**
(21) Application number: 02252365.8
(22) Date of filing: 02.04.2002
(51) Int. Cl.: G06T 3/40

(54) **Image processing**

(71) Applicant: TELEFONAKTIEBOLAGET LM ERICSSON, 126 25 Stockholm (SE)
(72) Inventor: Hansson, Ted, 214 35 Malmö (SE); Svensson, Johan, 264 70 Klippan (SE)
(74) Representative: Vigars, Christopher Ian

(57) **Abstract**

A method of processing a primary image to produce a secondary image includes defining arrays corresponding to the columns and rows of the primary or secondary image, and storing information locating a primary image pixel in the secondary image

## Description

The present application relates to image processing, and in particular to the processing and display of images on mobile telecommunications devices.

### BACKGROUND OF THE INVENTION

Increasingly, mobile telecommunications devices are expected to support graphical imaging. For example, third generation (3G) platforms will support imaging. However, the memory and display devices in such mobile platforms are small compared to the traditional computer environment where the images are very often created. This means that large images either cannot be displayed or must be reduced in size to be displayed on mobile devices.

There are many known resize algorithms, which most often work on complete images. However, since mobile devices do not have large memory storage devices, it is not possible to use such algorithms, since a complete uncompressed large image cannot be stored in a mobile device.

In addition, many algorithms require many arithmetical divisions to be made, which can place high demands on a fixed point processor device which is common in mobile devices.

It is therefore desirable to provide a method of downscaling images for display on small portable devices, such as mobile telecommunications devices.

### SUMMARY OF THE PRESENT INVENTION

According to one aspect of the present invention, there is provided a method of translating a primary image to a secondary image, the method comprising:
defining first and second arrays for storing data relating to locations in the secondary image of rows and columns respectively of the primary image;
receiving primary image data;
obtaining locations in the secondary image for pixels of the primary image using data stored in the first and second arrays;
storing and/or displaying pixels from the primary image data at such obtained locations in the secondary image.

According to another aspect of the present invention, there is provided a method wherein obtaining the locations in the secondary image comprises determining the location in the first array of the row coordinate of the pixel in the primary image and determining the location in the second array of the column coordinate of the pixel in the primary image, the determined locations giving the coordinates of the pixel in the secondary image.

According to another aspect of the present invention, there is provided a method of translating a primary image comprising a first plurality of pixels arranged in *m* columns and n rows, to a secondary image comprising a second plurality of pixels arranged in p columns and q rows, the method comprising:
defining a first array having p locations;
defining a second array having q locations;
determining which columns and rows of the primary image are to be included in the secondary image, thereby defining included columns and rows;
for each location of the first array, storing therein data indicative of an included column from the primary image;
for each location of the second array, storing therein data indicative of an included row from the primary image;
determining a location in the secondary image of a pixel from the primary image using data stored in the first and second arrays at locations therein corresponding to the position of the pixel in the primary image; and
storing and/or displaying pixels from the primary image in the secondary image on the basis of the determined location information.

### BRIEF DESCRIPTION OF THE DRAWINGS

Figure 1 illustrates downsizing of an image;
Figure 2 illustrates schematically parts of a mobile device;
Figure 3 is a flowchart illustrating a first embodiment of the present invention;
Figure 4 illustrates first and second arrays used in the first embodiment of the invention;
Figure 5 illustrates the first embodiment of the present invention;
Figure 6 is a flowchart illustrating a second embodiment of the present invention;
Figure 7 illustrates first and second arrays used in a second embodiment of the present invention; and
Figure 8 illustrates the second embodiment of the present invention.

### DETAILED DESCRIPTION OF THE PREFERRED EMBODIMENTS

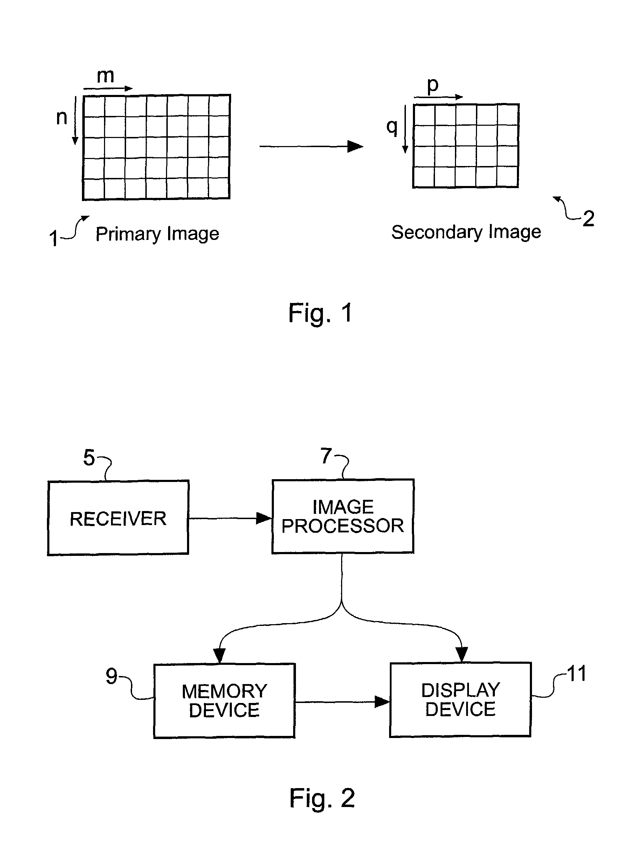

Figure 1 illustrates downscaling of a primary image 1 to a secondary image 2. The primary image is made up of a plurality of pixels arranged in M columns by N rows. Similarly, the secondary image 2 is made up of a number of pixels arranged in P columns by Q rows. As described above it is desirable to reduce the size of the primary image, in order that it can be displayed on a small display of a mobile telecommunications device, for example. Parts of such a device are shown schematically in Figure 2. The device includes a receiver 5 for receiving image data, an image processor 7 for decoding/decompressing the image data for supply to either or both of a memory device 9 or display device 11. The memory device 9 can supply image data to the display device 11 directly.

In embodiments of the present invention, the image processor operates to downscale the primary image to a secondary image.

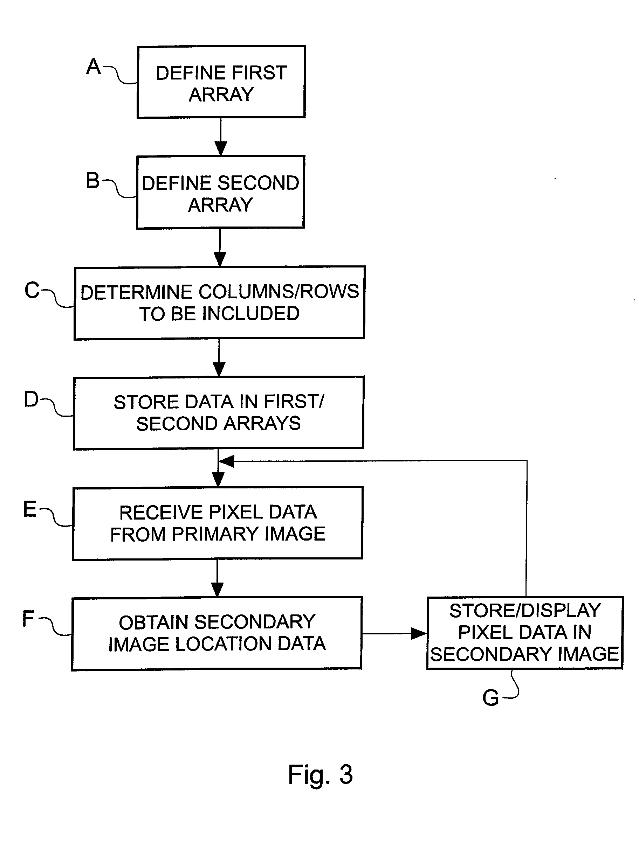

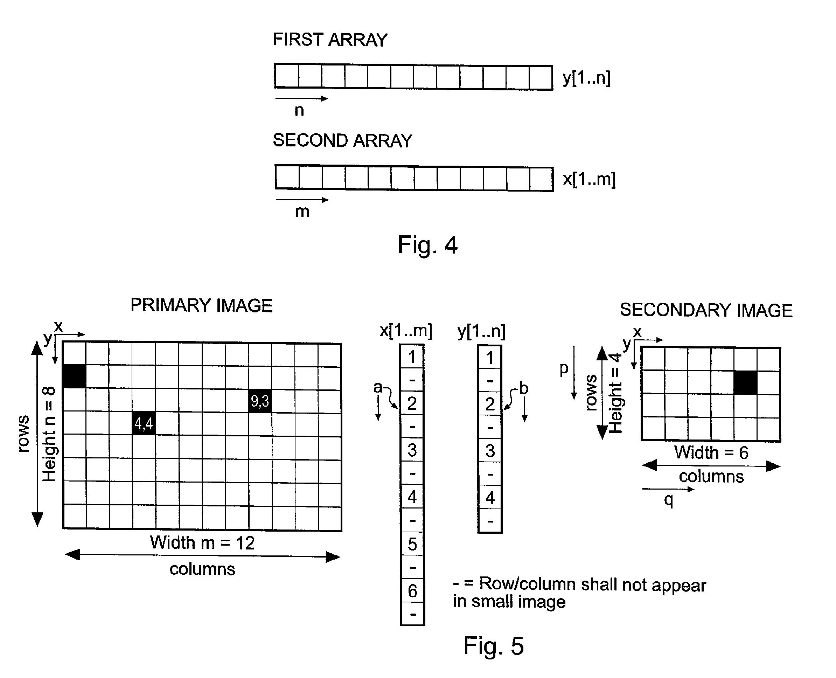

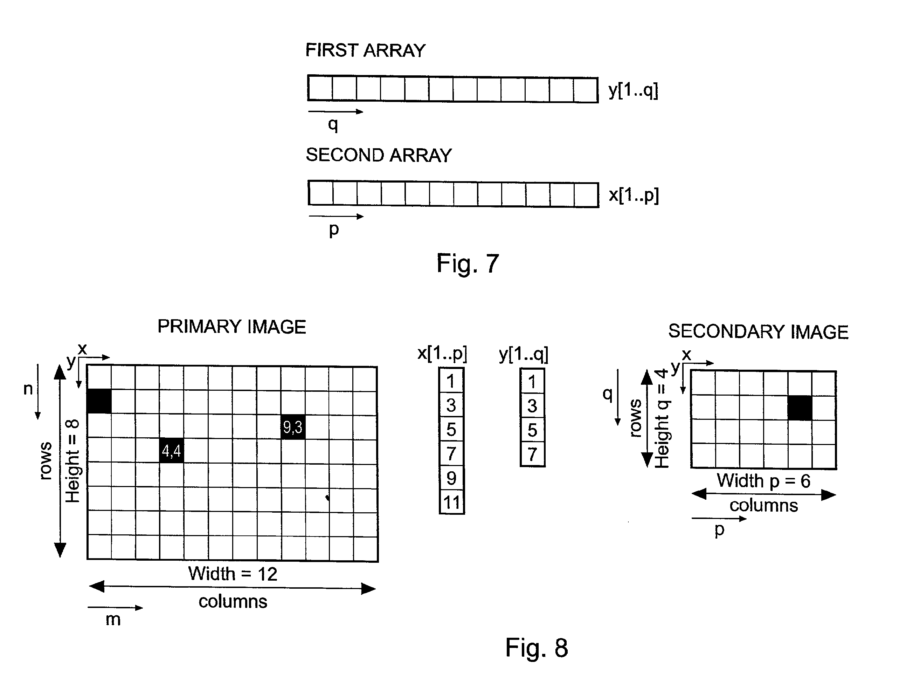

A first embodiment of the present invention will now be explained with reference to Figure 3, which is a flowchart setting out the steps of a method of downscaling an image. Steps A and B define first and second arrays respectively. The first example of these arrays is shown in Figure 4. The first array corresponds to the number of rows of the primary image and therefore has N locations. The second array relates to the columns in the primary image, and therefore has M locations. A second example of the first and second arrays is shown in Figure 7. In this case the first array relates to the rows of the secondary image, and therefore has Q locations, and the second array relates to the columns of the secondary image and therefore has P locations.

Referring once again to Figure 3, at step C it is determined which of the rows and columns of the primary image 1 are to be included in the secondary image 2. For example, a simple downscaling technique may require that only every other row and every other column of the primary image are to be included in the secondary image. This would result in an effective scaling of 50%. Such a scaling should be seen to be purely exemplary, and any choice of scaling factor would be appropriate.

Once the rows and columns of the primary image 1 which are to be included in the secondary image 2 have been determined, then (step D) the location of those rows and columns in the secondary image are stored in the first and second arrays. Accordingly, location a of the first array contains the column number in the secondary image where pixels from column a of the primary image are to be displayed. Similarly, the second array is used to store information indicating the position of the primary image rows in the secondary image.

Returning to Figure 3, at step E pixel data is received from the primary image data, and then at step F the corresponding secondary image data is determined from the first and second arrays. In this first embodiment, the location in the secondary image is determined by finding the values stored at locations a and b in the first and second arrays respectively. If no value is stored in one or both locations, then the primary image pixel concerned does not appear in the secondary image. In step G, the pixel data is stored or displayed as appropriate on the basis of the retrieved location data.

Figure 5 illustrates an example using the method of Figure 3. The method can be summarised as follows:
- Create two arrays, X[1..*m*] and Y [1..*n*]. Where *m* is the width and n is the height of the large image, for example use an algorithm that uses the size of the original image and the known secondary display size (or the number of pixels in the images etc). If the image is to be cropped then a user area selection step is needed.
- Use some method to decide which columns and rows of the large image that shall appear in the small image
- Repeat for *k=*1 to m: If column *k* of the large image shall be used, enter the column number where it shall appear in the small image at X[*k*]
- Repeat for *k=*1 to n; If row *k* of the large image shall be used, enter the row number where it shall appear in the small image at Y[*k*]
- To decide if and where pixel [*a*,*b*] of the large image shall appear in the small image, simply look at X[*a*] and Y [*b*] .

The pixel at [4,4] in the primary image 1 will not appear in the secondary image 2, since not both X[4] and Y[4] contain a coordinate.

The pixel at [9,3] in the primary image 1 will appear in the secondary image 2 at [5,2], since X[9]=5 and Y[3]=2

The pixel at [1,2] in the primary image 1 will not appear in the secondary image 2, since not both X[1] and Y[2] contain a coordinate.

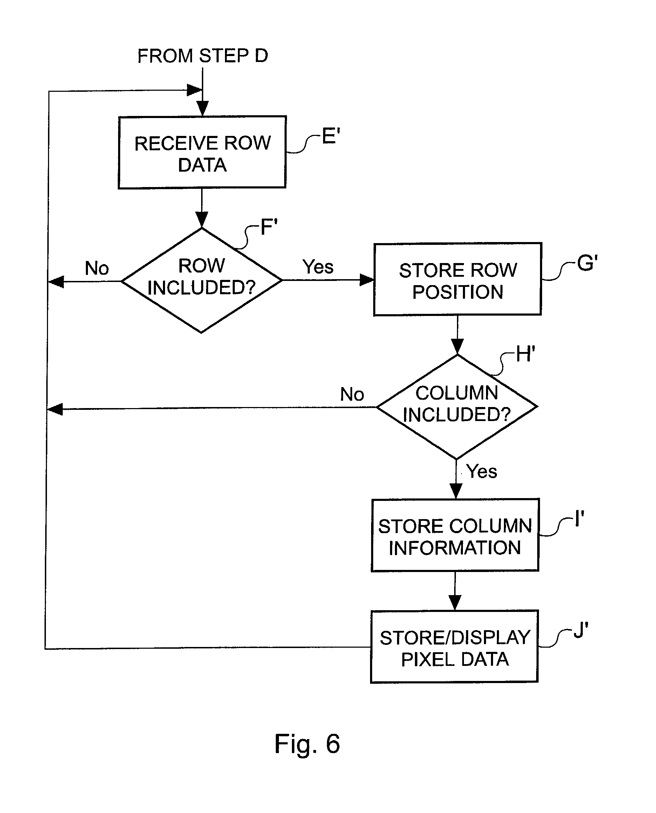

Figure 6 illustrates a second method of processing the primary image data. Steps A to D are the same for the first embodiment of Figure 3. At step E¹ decoded row data is received for a row of the primary image, and at step F¹ the first array (row array) is checked to determine the location of the received primary row in the secondary image. If the primary row is not included in the secondary image, then the processing reverts to step E¹ for reception of further row data. If the primary row is included, then the a position of the row in the secondary image is stored (step G¹) and then for each pixel of the row (i.e. each column) the second array (column array) is checked to determine whether the particular pixel is included in the secondary image. For all of the pixels to be shown in the secondary image, column information is stored (step I¹) and then the secondary image is stored or displayed (step J¹). Steps G¹ I¹ can be combined to reduce the number of storage operations.

Figure 7 illustrates first and second arrays for use in the second embodiment of the present invention. In this second embodiment, the first and second arrays are the size of the number of rows and columns of the secondary image respectively. In this method, to determine whether a pixel [a,b] of the primary image will appear in the secondary image, simply search the first array to determine whether a is found, and if so search the second array to find if b is found. The pixel shall appear in the secondary image at a location indicated by the position of a and b in the first and second arrays. Figure 8 illustrates such a method:
- Create two arrays, X[1..*p*] and Y[1..*q*]. Where *p* is the width and q is the height of the small image.
- Use a method to decide which columns and rows of the large image shall appear in the small image.
- Enter the number of the first column in the primary image that should be used in the secondary image at X[1], the second at X[2] and so on.
   Repeat this for the Y array using rows instead of columns.
- To decide if and where pixel [*a*,*b*] of the large image shall appear in the small image: search X, if X[*k*]=*a* is found, search Y. If also Y[*1*]=*b* is found, the pixel *[a,b]* shall appear at [*k,1*] in the small image.

In Figure 8, the pixel at [4,4] will not appear in the secondary image, since not both X[1..*m*]=4 and Y[1..*n*]=4, the pixel at [9,3] will appear in the small image at [5,2], since X[5]=9 and Y[2]=3, and the pixel at [1,2] will not appear in the small image, since not both x[1..m]=1 and Y[1..n]=2.

The methods embodying the present invention operate on decoded image data. Images are typically encoded in order to reduce the amount of data to be transmitted. The methods of the present invention can operate when encoded data relating to the whole of an image is decoded, as happens with current scaling algorithms. However, a preferable embodiment of the invention requires that only a portion of the encoded data can be decoded before the decisions regarding locations in the secondary image are made. For example, only data relating to a row or a pixel need be decoded for such a method to operate successfully. Using only a portion of the decoded image data means that the scaling/translation process can be made more efficient.

It will be readily appreciated that methods embodying the present invention can be used to provide other image processing effects in addition to simple downsizing. For example, the choice of array locations could result in rotation of the image or other effects.

## Claims

1. A method of translating a primary image to a secondary image, the method comprising:
defining first and second arrays for storing data relating to locations in the secondary image of rows and columns respectively of the primary image;
receiving primary image data;
obtaining locations in the secondary image for pixels of the primary image using data stored in the first and second arrays;
storing and/or displaying pixels from the primary image data at such obtained locations in the secondary image.

2. A method as claimed in claim 1, wherein receiving primary image data comprises receiving encoded data relating to the primary image, and decoding a portion of the encoded data to produce primary image data.

3. A method as claimed in claim 2, wherein the portion of the encoded data relates to a single pixel of the primary image.

4. A method as claimed in claim 2, wherein the portion of the encoded data relates to a row of pixels of the primary image.

5. A method as claimed in any one of claims 1 to 4, wherein the primary image comprises a plurality of pixels arranged in m columns and n rows, and the first and second arrays have n and m locations respectively.

6. A method as claimed in claim 5, wherein obtaining the locations in the secondary image comprises determining the contents of the first and second arrays indicated by the coordinates of the pixel in the primary image.

7. A method as claimed in any one of claims 1 to 4, wherein the secondary image comprises a plurality of pixels arranged in p columns and q rows, and the first and second arrays have p and q locations respectively.

8. A method as claimed in claim 7, wherein obtaining the locations in the secondary image comprises determining the location in the first array of the row coordinate of the pixel in the primary image and determining the location in the second array of the column coordinate of the pixel in the primary image, the determined locations giving the coordinates of the pixel in the secondary image.

9. A method of translating a primary image comprising a first plurality of pixels arranged in m columns and n rows, to a secondary image comprising a second plurality of pixels arranged in p columns and q rows, the method comprising:
defining a first array having m locations which relate to respective primary image columns;
defining a second array having n locations which relate to respective primary image rows;
determining which columns and rows of the primary image are to be included in the secondary image, thereby defining included columns and rows;
for each location of the first array, storing therein data indicative of the column in the secondary image which corresponds to the primary image column related to the location concerned;
for each location of the second array, storing therein data indicative of the row in the secondary image which corresponds to the primary image row related to the location concerned;
determining a location in the secondary image of a pixel from the primary image using data stored in the first and second arrays at locations therein corresponding to the position of the pixel in the primary image; and
storing and/or displaying pixels from the primary image in the secondary image on the basis of the determined location information.

10. A method as claimed in claim 9, wherein determining the location information comprises:
determining the contents of the locations of the first and second arrays indicated by the coordinates of the pixel in the primary image.

11. A method of translating a primary image comprising a first plurality of pixels arranged in m columns and n rows, to a secondary image comprising a second plurality of pixels arranged in p columns and q rows, the method comprising:
defining a first array having p locations;
defining a second array having q locations;
determining which columns and rows of the primary image are to be included in the secondary image, thereby defining included columns and rows;
for each location of the first array, storing therein data indicative of an included column from the primary image;
for each location of the second array, storing therein data indicative of an included row from the primary image;
determining a location in the secondary image of a pixel from the primary image using data stored in the first and second arrays at locations therein corresponding to the position of the pixel in the primary image; and
storing and/or displaying pixels from the primary image in the secondary image on the basis of the determined location information.

12. A method as claimed in claim 11, wherein determining the location information comprises:
determining the location in the first array of the row coordinate of the pixel in the primary image; and
determining the location in the second array of the column coordinate of the pixel in the primary image;
the determined locations giving the coordinates of the pixel in the secondary image.

13. Apparatus for translating a primary image to a secondary image, the apparatus comprising:
a controller operable to define first and second arrays for storing data relating to locations in a secondary image of rows and columns respectively of a primary image;
a receiver for receiving primary image data; and
a storage and/or display device for storing and/or displaying pixels from the primary image data at such obtained locations in the secondary image,
wherein the controller is operable to obtain locations in the secondary image for pixels of the primary image using data stored in the first and second arrays.

14. Apparatus as claimed in claim 13, wherein the receiver is operable to receive encoded data relating to the primary image, and to decode a portion of the encoded data to produce primary image data.

15. Apparatus as claimed in claim 14, wherein the portion of the encoded data relates to a single pixel of the primary image.

16. Apparatus as claimed in claim 14, wherein the portion of the encoded data relates to a row of pixels of the primary image.

17. Apparatus as claimed in any one of claims 13 to 16, wherein the primary image comprises a plurality of pixels arranged in m columns and n rows, and the first and second arrays have n and m locations respectively.

18. Apparatus as claimed in claim 17, wherein the controller is operable to determine the contents of the first and second arrays in dependence upon the coordinates of the pixel in the primary image.

19. Apparatus as claimed in any one of claims 13 to 16, wherein the secondary image comprises a plurality of pixels arranged in p columns and q rows, and the first and second arrays have p and q locations respectively.

20. Apparatus as claimed in claim 19, wherein the controller is operable to determine the location in the first array of the row coordinate of the pixel in the primary image and to determine the location in the second array of the column coordinate of the pixel in the primary image, the determined locations giving the coordinates of the pixel in the secondary image.

21. An electronic device including apparatus as claimed in any one of claims 13 to 20.

22. A mobile telecommunications device including apparatus as claimed in any one of claims 13 to 20.
